# EUROPEAN PATENT APPLICATION

(11) **EP 4 525 382 A1**
(43) Date of publication of application: **19.03.2025**
(21) Application number: 22941123.6
(22) Date of filing: 11.05.2022
(51) Int. Cl.: H04L 25/02, H04B 7/0456, H04L 27/26

(54) **METHOD AND APPARATUS FOR CONTROLLING REFERENCE SIGNAL TRANSMISSION BY INTELLIGENT METASURFACE RIS**

(71) Applicant: Beijing Xiaomi Mobile Software Co., Ltd., Beijing 100085 (CN)
(72) Inventor: CHI, Liangang, Beijing 100085 (CN); LIU, Haoxiang, Beijing 100085 (CN)
(74) Representative: Dehns Germany Partnerschaft mbB
(86) International application number: PCT/CN2022/092319
(87) International publication number: WO 2023/216165

(57) **Abstract**

The embodiments of the present invention disclose a method for controlling reference signal transmission by an intelligent metasurface (RIS) and are applicable in the technical field of communications, wherein a method executed by an intelligent metasurface comprises: an RIS sending indication information to a network device, the indication information being used for indicating capability information of the RIS for sending a reference signal; and then, after receiving control information sent by the network device and used for controlling the RIS to send the reference signal, the RIS can transmit the reference signal according to the control information. The RIS reports the reference signal transmission capabilities thereof to a network device, and is thus able to transmit the reference signal according to control information from the network device, thereby further being able to achieve a channel between the RIS and the network device and a channel between the RIS and a terminal so as to perform channel estimation, thus improving the reliability of the communications system.

## Description

### FIELD

The present invention relates to the field of communication technologies, and in particular relates to a method for controlling a reconfigurable intelligence surface (RIS) to transmit a reference signal, and a device.

### BACKGROUND

With continuous development of communication technologies, a demand for communication quality is getting higher and higher.

In the related art, a reconfigurable intelligence surface (RIS) may be used to improve the communication quality. Moreover, in order to ensure reliable detection of signals, it needs to efficiently estimate channel state information (CSI) at a receiving end. Therefore, how to estimate a channel associated with the RIS is an urgent problem to be solved.

### SUMMARY

Embodiments of the present invention provide a method for controlling a reconfigurable intelligence surface (RIS) to transmit a reference signal, and a device, in which the RIS may send the reference signal according to control information sent by a network device.

According to a first aspect of embodiments of the present invention, there is provided a method for controlling an RIS to transmit a reference signal, performed by the RIS, including: sending indication information to a network device, in which the indication information is used to indicate capability information of transmitting the reference signal of the RIS; receiving control information sent by the network device, in which the control information is used to control the RIS to transmit the reference signal; and transmitting the reference signal according to the control information sent by the network device.

In the present invention, the RIS may send the indication information for indicating the capability information of transmitting the reference signal of the RIS to the network device, and after receiving the control information sent by the network device for controlling the RIS to transmit the reference signal, the RIS transmits the reference signal according to the control information. In this way, the RIS may transmit the reference signal according to the control information from the network device by reporting a capability of transmitting the reference signal to the network device, thereby performing channel estimation on a channel between the RIS and the network device and a channel between the RIS and the terminal device, and improving the reliability of the communication system.

Optionally, the capability information of transmitting the reference signal includes at least one of: a number of active array elements, position information of an active array element, or a maximum transmitting power of an active array element.

Optionally, the position information of the active array element includes at least one of: position information of a reference array element, a row number of the active array element, a column number of the active array element, a row spacing of the active array element, or a column spacing of the active array element.

Optionally, the indication information further includes at least one of: a number of rows of array elements included in an RIS array, a number of columns of array elements included in an RIS array, a row spacing of an RIS array element, or a column spacing of an RIS array element.

Optionally, the control information includes at least one of: activation information of the active array element; a power for transmitting the reference signal; an adjustment parameter of a generation sequence of the reference signal; a time-frequency domain position for transmitting the reference signal; or a time-frequency pattern of the active array element for transmitting the reference signal.

According to a second aspect of embodiments of the present invention, there is provided a method for controlling an RIS to transmit a reference signal, performed by a network device, including: receiving indication information sent by the RIS, in which the indication information is used to indicate capability information of transmitting the reference signal of the RIS; generating control information according to array information of the RIS and the capability information of transmitting the reference signal, in which the control information is used to control the RIS to transmit the reference signal; sending the control information to the RIS; and receiving the reference signal transmitted by the RIS.

In the present invention, after receiving the indication information, sent by the RIS, for indicating the capability information of transmitting the reference signal of the RIS, the network device may generate the control information for controlling the RIS to transmit the reference signal according to the array information of the RIS and the capability information of transmitting the reference signal, send the control information to the RIS, and receive the reference signal transmitted by the RIS. In this way, the RIS may transmit the reference signal according to the control information of the network device by reporting the capability of transmitting the reference signal to the network device, thereby performing channel estimation on a channel between the RIS and the network device and a channel between the RIS and the terminal device, and improving the reliability of the communication system.

Optionally, the capability information of transmitting the reference signal includes at least one of: a number of active array elements, position information of an active array element, or a maximum transmitting power of an active array element.

Optionally, the position information of the active array element includes at least one of: position information of a reference array element, a row number of the active array element, a column number of the active array element, a row spacing of the active array element, or a column spacing of the active array element.

Optionally, the indication information further includes at least one of: a number of rows of array elements included in an RIS array, a number of columns of array elements included in an RIS array, a row spacing of an RIS array element, or a column spacing of an RIS array element.

Optionally, the control information includes at least one of: activation information of the active array element; a power for transmitting the reference signal; an adjustment parameter of a generation sequence of the reference signal; a time-frequency domain position for transmitting the reference signal; or a time-frequency pattern of the active array element for transmitting the reference signal.

Optionally, the method further includes: sending configuration information of the reference signal to a terminal device.

Optionally, the configuration information of the reference signal includes at least one of: an antenna port identifier, a time-frequency domain position for transmitting the reference signal; or an adjustment parameter of a generation sequence of the reference signal.

According to a third aspect of embodiments of the present invention, there is provided a method for controlling an RIS to transmit a reference signal, performed by a terminal device, including: receiving the reference signal transmitted by the RIS; and performing channel estimation according to the reference signal.

In the present invention, after receiving the reference signal transmitted by the RIS, the terminal device may perform the channel estimation according to the reference signal. Therefore, the channel estimation is performed on the channel between the RIS and the terminal device, and the reliability of the communication system is improved.

Optionally, receiving the reference signal transmitted by the RIS includes: receiving configuration information of the reference signal sent by a network device; and receiving the reference signal transmitted by the RIS according to the configuration information.

Optionally, the configuration information of the reference signal includes at least one of: an antenna port identifier, a time-frequency domain position for transmitting the reference signal; or an adjustment parameter of a generation sequence of the reference signal.

According to a fourth aspect of embodiments of the present invention, there is provided a communication device on a reconfigurable intelligence surface (RIS) side, including: a transceiving module configured to send indication information to a network device, in which the indication information is used to indicate capability information of transmitting the reference signal of the RIS, the transceiving module is further configured to receive control information sent by the network device, in which the control information is used to control the RIS to transmit the reference signal; and a processing module configured to transmit the reference signal to the network device.

Optionally, the capability information of transmitting the reference signal includes at least one of: a number of active array elements, position information of an active array element, or a maximum transmitting power of an active array element.

Optionally, the position information of the active array element includes at least one of: position information of a reference array element, a row number of the active array element, a column number of the active array element, a row spacing of the active array element, or a column spacing of the active array element.

Optionally, the indication information further includes at least one of: a number of rows of array elements included in an RIS array, a number of columns of array elements included in an RIS array, a row spacing of an RIS array element, or a column spacing of an RIS array element.

Optionally, the control information includes at least one of: activation information of the active array element; a power for transmitting the reference signal; an adjustment parameter of a generation sequence of the reference signal; a time-frequency domain position for transmitting the reference signal; or a time-frequency pattern of the active array element for transmitting the reference signal.

According to a fifth aspect of embodiments of the present invention, there is provided a communication device on a network device side, including: a transceiving module configured to receive indication information sent by a reconfigurable intelligence surface (RIS), in which the indication information is used to indicate capability information of transmitting a reference signal of the RIS; and a processing module configured to generate control information according to array information of the RIS and the capability information of transmitting the reference signal, in which the control information is used to control the RIS to transmit the reference signal. The above transceiving module is further configured to send the control information to the RIS. The above transceiving module is further configured to receive the reference signal transmitted by the RIS.

Optionally, the capability information of transmitting the reference signal includes at least one of: a number of active array elements, position information of an active array element, or a maximum transmitting power of an active array element.

Optionally, the position information of the active array element includes at least one of: position information of a reference array element, a row number of the active array element, a column number of the active array element, a row spacing of the active array element, or a column spacing of the active array element.

Optionally, the indication information further includes at least one of: a number of rows of array elements included in an RIS array, a number of columns of array elements included in an RIS array, a row spacing of an RIS array element, or a column spacing of an RIS array element.

Optionally, the control information includes at least one of: activation information of the active array element; a power for transmitting the reference signal; an adjustment parameter of a generation sequence of the reference signal; a time-frequency domain position for transmitting the reference signal; or a time-frequency pattern of the active array element for transmitting the reference signal.

Optionally, the above transceiving module is further configured to send the control information to the RIS.

Optionally, the configuration information of the reference signal includes at least one of: an antenna port identifier, a time-frequency domain position for transmitting the reference signal; or an adjustment parameter of a generation sequence of the reference signal.

According to a sixth aspect of embodiments of the present invention, there is provided a communication device on a terminal device side, including: a transceiving module configured to receive a reference signal transmitted by a reconfigurable intelligence surface (RIS); and a processing module configured to perform channel estimation according to the reference signal.

Optionally, the above vtransceiving module is further configured to receive the reference signal transmitted by the RIS.

Optionally, the configuration information of the reference signal includes at least one of: an antenna port identifier, a time-frequency domain position for transmitting the reference signal; or an adjustment parameter of a generation sequence of the reference signal.

According to a seventh aspect of embodiments of the present invention, there is provided a communication device, including: a processor configured to invoke a computer program stored in a memory, to cause the method of the first aspect described above to be implemented.

According to an eighth aspect of embodiments of the present invention, there is provided a communication device, including: a processor configured to invoke a computer program stored in a memory, to cause the method of the second aspect described above to be implemented.

According to a ninth aspect of embodiments of the present invention, there is provided a communication device, including: a processor configured to invoke a computer program stored in a memory, to cause the method of the third aspect described above to be implemented.

According to a tenth aspect of embodiments of the present invention, there is provided a communication device, including: a processor; and a memory; in which the memory is configured to store a computer program, and the processor is configured to execute the computer program stored in the memory to cause the device to perform the method of the first aspect described above.

According to an eleventh aspect of embodiments of the present invention, there is provided a communication device, including: a processor; and a memory; in which the memory is configured to store a computer program, and the processor is configured to execute the computer program stored in the memory to cause the device to perform the method of the second aspect described above.

According to a twelfth aspect of embodiments of the present invention, there is provided a communication device, including: a processor; and a memory; in which the memory is configured to store a computer program, and the processor is configured to execute the computer program stored in the memory to cause the device to perform the method of the third aspect described above.

According to a thirteenth aspect of embodiments of the present invention, there is provided a communication device, including: a processor; and an interface circuit; in which the interface circuit is configured to receive code instructions and transmit the code instructions to the processor, and the processor is configured to execute the code instructions to cause the device to perform the method of the first aspect described above.

According to a fourteenth aspect of embodiments of the present invention, there is provided a communication device, including: a processor; and an interface circuit; in which the interface circuit is configured to receive code instructions and transmit the code instructions to the processor, and the processor is configured to execute the code instructions to cause the device to perform the method of the second aspect described above.

According to a fifteenth aspect of embodiments of the present invention, there is provided a communication device, including: a processor; and an interface circuit; in which the interface circuit is configured to receive code instructions and transmit the code instructions to the processor, and the processor is configured to execute the code instructions to cause the device to perform the method of the third aspect described above.

According to a sixteenth aspect of embodiments of the present invention, there is provided a system for controlling a reconfigurable intelligence surface (RIS) to transmit a reference signal, the system including a communication device of the fourth aspect, a communication device of the fifth aspect and a communication device of the sixth aspect, or the system including a communication device of the seventh aspect, a communication device of the eighth aspect and a communication device of the ninth aspect, or the system including a communication device of the tenth aspect, a communication device of the eleventh aspect and a communication device of the twelfth aspect, or the system including the communication device of the thirteenth aspect, the communication device of the fourteenth aspect and the communication device of the fifteenth aspect.

According to a seventeenth aspect of embodiments of the present invention, there is provided a computer-readable storage medium for storing instructions, which are used by a terminal device. When the instructions are executed, the terminal device performs the method of the first aspect described above.

According to an eighteenth aspect of embodiments of the present invention, there is provided a computer-readable storage medium for storing instructions, which are used by a network device. When the instructions are executed, the network device performs the method of the second aspect described above.

According to a nineteenth aspect of embodiments of the present invention, there is provided a computer-readable storage medium for storing instructions, which are used by a network device. When the instructions are executed, the network device performs the method of the third aspect described above.

According to a twentieth aspect of embodiments of the present invention, there is provided a computer program product including a computer program that, when run on a computer, causes the computer to perform the method of the first aspect described above.

According to a twenty-first aspect of embodiments of the present invention, there is provided a computer program product including a computer program that, when run on a computer, causes the computer to perform the method of the second aspect described above.

According to a twenty-second aspect of embodiments of the present invention, there is provided a computer program product including a computer program that, when run on a computer, causes the computer to perform the method of the third aspect described above.

According to a twenty-third aspect of embodiments of the present invention, there is provided a chip system including at least one processor and an interface for supporting a network device to implement functions involved in the first aspect, for example, determining or processing at least one of data and information involved in the above method. In a possible design, the chip system further includes a memory for storing computer programs and data necessary for the terminal device. The chip system may be consisted of chips, or may include chips and other discrete devices.

According to a twenty-fourth aspect of embodiments of the present invention, there is provided a chip system including at least one processor and an interface for supporting a network device to implement functions involved in the second aspect, for example, determining or processing at least one of data and information involved in the above method. In a possible design, the chip system further includes a memory for storing computer programs and data necessary for the terminal device. The chip system may be consisted of chips, or may include chips and other discrete devices.

According to a twenty-fifth aspect of embodiments of the present invention, there is provided a chip system including at least one processor and an interface for supporting a network device to implement functions involved in the third aspect, for example, determining or processing at least one of data and information involved in the above method. In a possible design, the chip system further includes a memory for storing computer programs and data necessary for the terminal device. The chip system may be consisted of chips, or may include chips and other discrete devices.

According to a twenty-sixth aspect of embodiments of the present invention, there is provided a computer program that, when run on a computer, causes the computer to perform the method of the first aspect described above.

According to a twenty-seventh aspect of embodiments of the present invention, there is provided a computer program that, when run on a computer, causes the computer to perform the method of the second aspect described above.

According to a twenty-eighth aspect of embodiments of the present invention, there is provided a computer program that, when run on a computer, causes the computer to perform the method of the third aspect described above.

### BRIEF DESCRIPTION OF THE DRAWINGS

In order to more clearly illustrate embodiments of the present invention or technical solutions in the related art, a brief description of drawings used in the embodiments or in the related art is given below.
FIG. 1 is a schematic diagram illustrating an architecture of a communication system according to embodiments of the present invention.
FIG. 2 is a flow chart illustrating a method for controlling an RIS to transmit a reference signal according to embodiments of the present invention.
FIG. 3 is a flow chart illustrating method for controlling an RIS to transmit a reference signal according to embodiments of the present invention.
FIG. 4 is a flow chart illustrating method for controlling an RIS to transmit a reference signal according to embodiments of the present invention.
FIG. 5 is a block diagram illustrating a communication device according to embodiments of the present invention.
FIG. 6 is a block diagram illustrating another communication device according to embodiments of the present invention.
FIG. 7 is a block diagram illustrating a chip according to embodiments of the present invention.

### DETAILED DESCRIPTION

For ease of understanding, the terms involved in the present invention are first introduced.

### 1. Pilot

The pilot is a specific symbol placed at a specific position of a time-frequency grid, and a receiving end estimates corresponding channel information according to the pilot.

### 2. Reconfigurable intelligence surface (RIS)

The RIS refers to a "reconfigurable intelligent surface" or also called an "intelligent reflective surface". In an appearance perspective, the RIS is a thin sheet. It may be flexibly deployed in propagation environment of a wireless communication, and implement control of frequency, phase, polarization and other features of reflected or refracted electromagnetic waves, thereby achieving a purpose of reshaping a wireless channel. Specifically, the RIS may reflect a signal incident on its surface to a specific direction through pre-coding technologies, thereby enhancing a signal strength at the receiving end and realizing the control of the channel.

In order to better understand a method for controlling the RIS to transmit a reference signal disclosed in embodiments of the present invention, a communication system to which embodiments of the present invention is applicable will be described below.

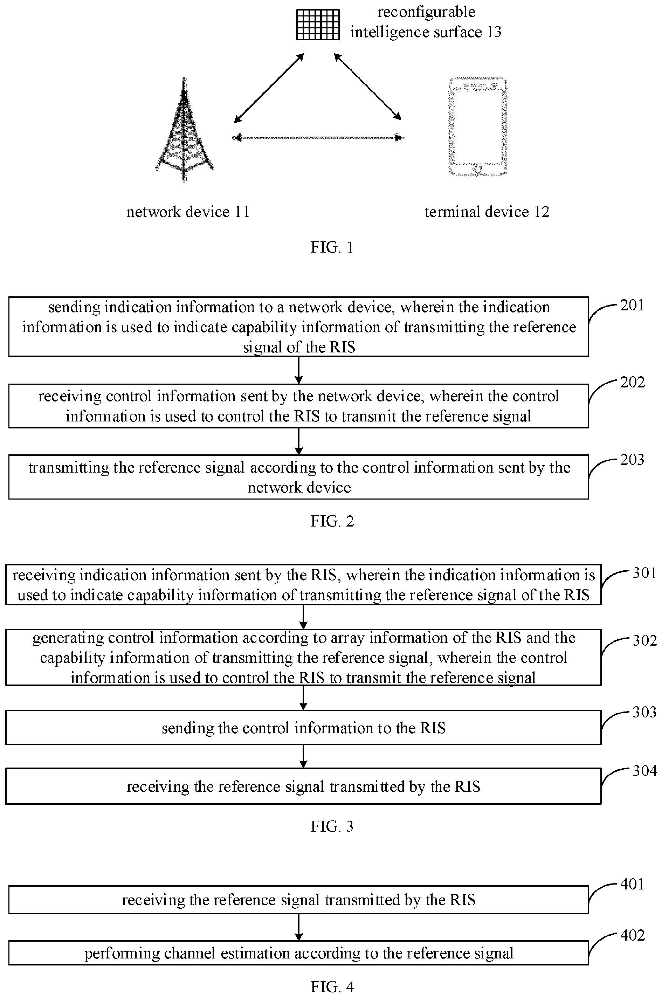

Referring to FIG. 1, FIG. 1 is a schematic diagram illustrating an architecture of a communication system according to embodiments of the present invention. The communication system may include, but is not limited to, a network device, an intelligent relay, and a terminal device. The number and form of devices shown in FIG. 1 are merely for example and do not constitute a definition of embodiments of the present invention. In practical applications, two or more network devices, two or more intelligent relays, and two or more terminal devices may be included. The communication system shown in FIG. 1 is exemplified as including a network device 11, a terminal device 12, and an RIS 13.

It should be noted that the technical solutions of embodiments of the present invention may be applied to various communication systems. For example: a long term evolution (LTE) system, a 5th generation (5G) mobile communication system, a 5G new radio (NR) system, or other future new mobile communication systems and the like.

The network device 11 in embodiments of the present invention is an entity on a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system and the like. The specific technology and specific device form adopted by the network device are not limited in the embodiments of the present invention. The network device provided by embodiments of the present invention may be composed of a central unit (CU) and a distributed unit (DU), in which the CU may also be referred to as a control unit. A protocol layer of the network device, such as a base station, may be split using a CU-DU structure, with the functions of some protocol layers being placed in the CU for centralized control, and the functions of the remaining part or all of the protocol layers being distributed in the DU, and the DU is controlled centrally by the CU.

The terminal device 12 in embodiments of the present invention is an entity on a user side for receiving or transmitting signals, such as a mobile phone. The terminal device may also be referred to as a terminal, a user equipment (UE), a mobile station (MS), a mobile terminal (MT) and the like. The terminal device may be an automobile with a communication function, a smart automobile, a mobile phone, a wearable device, a Pad, a computer with a wireless transceiving function, a virtual reality (VR) terminal device, an augmented reality (AR) terminal device, a wireless terminal device in industrial control, and a wireless terminal device in self-driving, a wireless terminal device in remote medical surgery, a wireless terminal device in smart grid, a wireless terminal device in transportation safety, a wireless terminal device in smart city, a wireless terminal device in smart home and the like. The specific technology and specific device form adopted by the terminal are not limited in the embodiments of the present invention.

It may be understood that the communication system described in the embodiments of the present invention is for a purpose of more clearly illustrating the technical solution of embodiments of the present invention, which does not constitute a definition on the technical solutions provided by embodiments of the present invention. Moreover, it is known by those skilled in the art that the technical solutions provided by embodiments of the present invention are also applicable to similar technical problems with the evolution of the system architecture and the emergence of new business scenarios.

In general, channel estimation may be performed according to the pilot. However, the RIS itself is nearly passive, and a passive array element may not send a reference signal with pilot information. In the present invention, it is considered that some array elements in the RIS may be active, and the active array element may send the reference signal with the pilot information. Therefore, the RIS may report information such as the active array element to the network device, and the network device may send control information according to active array element information reported by the RIS, and control the active array element in the RIS to transmit the reference signal, so that the network device or the terminal device may perform the channel estimation according to the reference signal transmitted by the RIS.

Referring to FIG. 2, FIG. 2 is a flow chart illustrating a method for controlling an RIS to transmit a reference signal according to embodiments of the present invention, in which the method is performed by the RIS. As shown in FIG. 2, the method may include, but is not limited to, the following steps.

In step 201, indication information is sent to the network device, in which the indication information is used to indicate capability information of transmitting the reference signal of the RIS.

The capability information of transmitting the reference signal includes at least one of: a number of active array elements, position information of an active array element, or a maximum transmitting power of an active array element.

In the present invention, the position information of the active array element includes at least one of: position information of a reference array element, a row number of the active array element, a column number of the active array element, a row spacing of the active array element, or a column spacing of the active array element.

The reference array element (also called a base array element) may be a reference array element for determining a position of the active array element. The position information of the reference array element may be information such as the row number and the column number of the reference array element in an RIS array. The network device may determine the position of each active array element of the RIS according to the position information of the reference array element.

For example, the position information of the active array element includes position information (x, y) of the reference array element, and the row spacing and column spacing of each active array element relative to the reference array element. The network device may determine a row number and a column number of each active array element (i.e., determine the position of each active array element in the RIS array) according to the position information (x, y) and the row spacing and column spacing of each active array element relative to the reference array element, where x represents the row number of the reference array element in the RIS array, and y represents the column number of the reference array element in the RIS array.

Alternatively, the position information of the active array elements may be the row number and the column number of each active array element.

For another example, in a case where the active array elements are distributed at equal intervals in the RIS array, the position information of the active array element may include the position information (x, y) of the reference array element, a row spacing k of the active array element, and a column spacing j of the active array element. The network device may determine the active array elements by starting from the reference array element and determining array elements at the spacing of k rows and j columns sequentially. That is, the array elements with positions of (x+ak, y+bj) in the RIS array are determined as the active array elements, in which k, j, a, b are non-zero integers.

Optionally, in order to avoid errors in the position information of active array elements in the indication information, the indication information further includes at least one of: a number of rows of array elements included in the RIS array, a number of columns of array elements included in the RIS array, the row spacing of the RIS array element, or the column spacing of the RIS array element. Therefore, the network device may verify the position information of the active array element according to the number of rows, columns and the like of the array element included in the RIS array in a case of receiving the indication information. In a case where the position of the active array element indicated by the position information of the active array element exceeds a range of the RIS array, the network device may determine that the position information of the active array element is invalid, thereby instructing the RIS to re-upload the position information of the active array element; or in a case where the position information of the active array element indicates that the position of the active array element exceeds the range of the RIS array, the network device may ignore the indication information, which is not limited in the present invention.

For example, in a case where the row spacing and column spacing of the RIS array are equal, the indication information may include that the number of rows of the RIS array is represented as M, the number of columns of the RIS array is represented as N, and the spacing is represented as d. The unit of spacing may be a preset absolute unit of centimeters (cm).

It is understood that the above parameters x, m, k, x+ak are all less than or equal to M, and the above parameters y, n, j, y+bj are all less than or equal to N.

In step 202, the control information sent by the network device is received, in which the control information is used to control the RIS to transmit the reference signal.

The control information includes at least one of: activation information of the active array element; a power for transmitting the reference signal; an adjustment parameter of a generation sequence of the reference signal; a time-frequency domain position for transmitting the reference signal; or a time-frequency pattern of the active array element for transmitting the reference signal.

In the present invention, the network device may generate the control information according to array information of the RIS and the capability information of transmitting the reference signal. For example, the activation information of the active array element may be generated according to the position information of the active array element and the array information of the RIS and sent to the RIS to instruct the RIS to activate all or some of the active array elements.

Alternatively, the network device may further determine the power of each active array element of the RIS for sending the reference signal according to the maximum transmitting power of the active array element indicated in the indication information. It may be understood that the power for transmitting the reference signal should be less than or equal to the maximum transmitting power of the active array element.

In the present invention, the network device may further instruct the RIS to generate the generation sequence of the reference signal according to the adjustment parameter of the generation sequence of the reference signal. Furthermore, the network device may configure the time-frequency pattern for each active array element in the RIS for transmitting the reference signal, and each active array element in the RIS may transmit the reference signal according to the configured time-frequency pattern.

Optionally, the time-frequency pattern of each array element in the RIS may further be agreed upon via a protocol.

In step 203, the reference signal is transmitted according to the control information sent by the network device.

In the present invention, each active array element in the RIS may generate and transmit the reference signal according to information indicated in the control information. For example, the power for transmitting the reference signal may be controlled according to the power for transmitting the reference signal indicated in the control information. Alternatively, each active array element is controlled to transmit the reference signal at a specified time-frequency domain position according to the time-frequency domain position indicated in the control information and the time-frequency pattern of each active array element for transmitting the reference signal. Thereafter, the network device may receive the reference signal and perform channel estimation on a channel between the network device and the RIS according to the reference signal, or the terminal device may receive the reference signal and perform channel estimation on a channel between the terminal device and the RIS according to the reference signal.

In the present invention, the RIS may send the indication information for indicating the capability information of transmitting the reference signal of the RIS to the network device, and after receiving the control information sent by the network device for controlling the RIS to transmit the reference signal, the RIS transmits the reference signal according to the control information. In this way, the RIS may transmit the reference signal according to the control information of the network device by reporting a capability of transmitting the reference signal to the network device, thereby performing the channel estimation on the channel between the RIS and the network device and the channel between the RIS and the terminal device, and improving the reliability of the communication system.

Referring to FIG. 3, FIG. 3 is a flow chart illustrating method for controlling an RIS to transmit a reference signal according to embodiments of the present invention, in which the method is performed by the network device. As shown in FIG. 3, the method may include, but is not limited to the following steps.

In step 301, the indication information sent by the RIS is received, in which the indication information is used to indicate the capability information of transmitting the reference signal of the RIS.

The capability information of transmitting the reference signal includes at least one of: the number of the active array elements, the position information of the active array element, or the maximum transmitting power of the active array element.

In the present invention, the position information of the active array element includes at least one of: the position information of the reference array element, the row number of the active array element, the column number of the active array element, the row spacing of the active array element, or the column spacing of the active array element.

The reference array element may be the reference array element for determining the position of the active array element. The position information of the reference array element may be the information such as the row number and the column number of the reference array element in the RIS array. The network device may determine the position of each active array element of the RIS according to the position information of the reference array element.

For example, the position information of the active array element includes the position information (x, y) of the reference array element, and the row spacing and column spacing of each other active array element relative to the reference array element. The network device may determine the row number and the column number of each active array element (i.e., determine the position of each active array element in the RIS array) according to the position information (x, y) and the row spacing and column spacing of each active array element relative to the reference array element, where x represents the row number of the reference array element in the RIS array, and y represents the column number of the reference array element in the RIS array.

Alternatively, the position information of the active array elements may be the row number and the column number of each active array element.

For another example, in the case where the active array elements are distributed at equal intervals in the RIS array, the position information of the active array element may include the position information (x, y) of the reference array element, the row spacing k of the active array element, and the column spacing j of the active array element. The network device may determine the active array elements by starting from the reference array element and determining array elements at the spacing of k rows and j columns sequentially. That is, the array elements with positions of (x+ak, y+bj) in the RIS array are determined as the active array elements, in which k, j, a, b are non-zero integers.

Optionally, in order to avoid the errors in the position information of the active array elements in the indication information, the indication information further includes at least one of: the number of rows of array elements included in the RIS array, the number of columns of array elements included in the RIS array, the row spacing of the RIS array element, or the column spacing of the RIS array element. Therefore, the network device may verify the position information of the active array element according to the number of rows, columns and the like of the array element included in the RIS array in the case of receiving the indication information. In the case where the position of the active array element indicated by the position information of the active array element exceeds the range of the RIS array, the network device may determine that the position information of the active array element is invalid, thereby instructing the RIS to re-upload the position information of the active array element; or in the case where the position information of the active array element indicates that the position of the active array element exceeds the range of the RIS array, the network device may ignore the indication information, which is not limited in the present invention.

For example, in the case where the row spacing and column spacing of the RIS array are equal, the indication information may include that the number of rows of the RIS array is represented as M, the number of columns of the RIS array is represented as N, and the spacing is represented as d. The unit of spacing may be the preset absolute unit of centimeters (cm).

It is understood that the above parameters x, m, k, x+ak are all less than or equal to M, and the above parameters y, n, j, y+bj are all less than or equal to N.

In step 302, the control information is generated according to the array information of the RIS and the capability information of transmitting the reference signal, in which the control information is used to control the RIS to transmit the reference signal.

The control information includes at least one of: the activation information of the active array element; the power for transmitting the reference signal; the adjustment parameter of the generation sequence of the reference signal; the time-frequency domain position for transmitting the reference signal; or the time-frequency pattern of the active array element for transmitting the reference signal.

In the present invention, the network device may generate the control information according to the array information of the RIS and the capability information of transmitting the reference signal. For example, the activation information of the active array element may be generated according to the position information of the active array element and the array information of the RIS and sent to the RIS to instruct the RIS to activate all or some of the active array elements.

Alternatively, the network device may further determine the power of each active array element of the RIS for sending the reference signal according to the maximum transmitting power of the active array element indicated in the indication information. It may be understood that the power for transmitting the reference signal should be less than or equal to the maximum transmitting power of the active array element.

In the present invention, the network device may further instruct the RIS to generate the generation sequence of the reference signal according to the adjustment parameter of the generation sequence of the reference signal. Furthermore, the network device may configure the time-frequency pattern for each active array element in the RIS for transmitting the reference signal, and each active array element in the RIS may transmit the reference signal according to the configured time-frequency pattern.

Optionally, the time-frequency pattern of each array element in the RIS may further be agreed upon via the protocol.

In step 303, the control information is sent to the RIS.

Optionally, the network device may send the configuration information of the reference signal to the terminal device. The configuration information of the reference signal includes at least one of: an antenna port identifier, the time-frequency domain position for transmitting the reference signal; or the adjustment parameter of the generation sequence of the reference signal. The antenna port identifier may be any information that may uniquely determine the antenna port, such as a serial number of the antenna port, which is not limited in the embodiments of the present invention.

In this way, the terminal device may receive, at the time-frequency domain position for transmitting the reference signal in the configuration information, a reference signal associated with the antenna port identifier, or the terminal device receives the reference signal according to the adjustment parameter of the generation sequence of the reference signal.

In step 304, the reference signal transmitted by the RIS is received.

In the present invention, each active array element in the RIS may generate and transmit the reference signal according to information indicated in the control information. For example, the power for transmitting the reference signal may be controlled according to the power for transmitting the reference signal indicated in the control information. Alternatively, each active array element is controlled to transmit the reference signal at a specified time-frequency domain position according to the time-frequency domain position indicated in the control information and the time-frequency pattern of each active array element for transmitting the reference signal. Thereafter, the network device may receive the reference signal and perform the channel estimation on the channel between the network device and the RIS according to the reference signal.

In the present invention, after receiving the indication information, sent by the RIS, for indicating the capability information of transmitting the reference signal of the RIS, the network device may generate the control information for controlling the RIS to transmit the reference signal according to the array information of the RIS and the capability information of transmitting the reference signal, and send the control information to the RIS, and receive the reference signal transmitted by the RIS. In this way, the RIS may transmit the reference signal according to the control information of the network device by reporting the capability of transmitting the reference signal to the network device, thereby performing the channel estimation on the channel between the RIS and the network device, and improving the reliability of the communication system.

Referring to FIG. 4, FIG. 4 is a flow chart illustrating method for controlling an RIS to transmit a reference signal according to embodiments of the present invention, in which the method is performed by the terminal device. As shown in FIG. 4, the method may include, but is not limited to the following steps.

In step 401, the reference signal transmitted by the RIS is received.

In the present invention, each active array element in the RIS may generate and transmit the reference signal according to the information indicated in the control information sent by the network device. The control information is determined by the network device according to the active array element information reported by the RIS, and the control information is used to control the RIS to transmit the reference signal.

In the present invention, the terminal device may receive the configuration information of the reference signal sent by the network device, and then may receive the reference signal transmitted by the RIS according to the configuration information.

The configuration information of the reference signal includes at least one of: the antenna port identifier, the time-frequency domain position for transmitting the reference signal; or the adjustment parameter of the generation sequence of the reference signal. The antenna port identifier may be any information that may uniquely determine the antenna port, such as the serial number of the antenna port, which is not limited in embodiments of the present invention.

In the present invention, the terminal device may receive, at the time-frequency domain position for transmitting the reference signal in the configuration information, the reference signal associated with the antenna port identifier, or the terminal device receives the reference signal according to the adjustment parameter of the generation sequence of the reference signal.

In step 402, the channel estimation is performed according to the reference signal.

In the present invention, the terminal device may receive the reference signal transmitted by the RIS and perform the channel estimation on the channel between the terminal device and the RIS according to the reference signal.

In the present invention, after receiving the reference signal transmitted by the RIS, the terminal device may perform the channel estimation according to the reference signal. Therefore, the channel estimation is performed on the channel between the RIS and the terminal device, and the reliability of the communication system is improved.

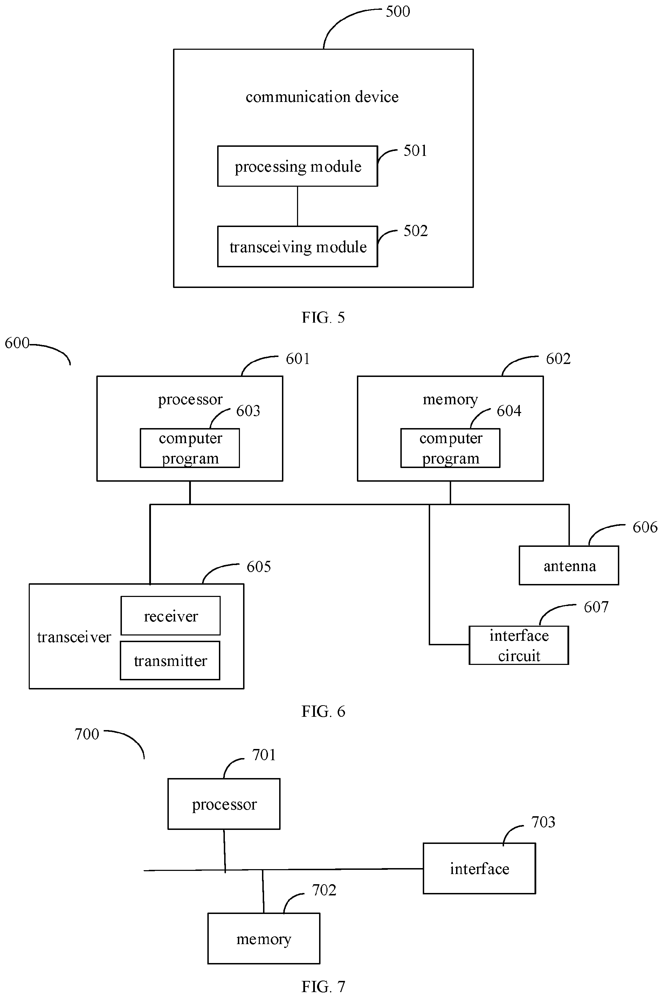

Referring to FIG. 5, FIG. 5 is a block diagram illustrating a communication device according to embodiments of the present invention. The communication device 500 shown in FIG. 5 may include a processing module 501 and a transceiving module 502. The transceiving module 502 may include a sending module and/or a receiving module, in which the sending module is configured to implement a sending function, and the receiving module is configured to implement a receiving function, and the transceiving module 502 may implement the sending function and/or the receiving function.

It may be understood that the communication device 500 may be the RIS, a device in the RIS, or a device that may be used in conjunction with the RIS.

The communication device 500 is configured on an RIS side, in which: the transceiving module 502 is configured to send the indication information to the network device, in which the indication information is used to indicate the capability information of transmitting the reference signal of the RIS, the transceiving module is further configured to receive the control information sent by the network device, in which the control information is used to control the RIS to transmit the reference signal; and the processing module 501 is configured to transmit the reference signal according to the control information sent by the network device.

Optionally, the capability information of transmitting the reference signal includes at least one of: the number of active array elements, the position information of the active array element, or the maximum transmitting power of the active array element.

Optionally, the position information of the active array element includes at least one of: the position information of the reference array element, the row number of the active array element, the column number of the active array element, the row spacing of the active array element, or the column spacing of the active array element.

Optionally, the indication information further includes at least one of: the number of rows of array elements included in the RIS array, the number of columns of array elements included in the RIS array, the row spacing of the RIS array element, or the column spacing of the RIS array element.

Optionally, the control information includes at least one of: the activation information of the active array element; the power for transmitting the reference signal; the adjustment parameter of the generation sequence of the reference signal; the time-frequency domain position for transmitting the reference signal; or the time-frequency pattern of the active array element for transmitting the reference signal.

In the present invention, the RIS may send the indication information for indicating the capability information of transmitting the reference signal of the RIS to the network device, and after receiving the control information sent by the network device for controlling the RIS to transmit the reference signal, the RIS transmits the reference signal according to the control information. In this way, the RIS may transmit the reference signal according to the control information of the network device by reporting the capability of transmitting the reference signal to the network device, thereby performing the channel estimation on the channel between the RIS and the network device and the channel between the RIS and the terminal device, and improving the reliability of the communication system.

It may be understood that the communication device 500 may be the network device, a device in the network device, or a device that may be used in conjunction with the network device.

The communication device 500 is configured on a network device side, in which: the transceiving module 502 is configured to receive the indication information sent by the RIS, in which the indication information is used to indicate the capability information of transmitting the reference signal of the RIS; and the processing module 501 is configured to generate the control information according to the array information of the RIS and the capability information of transmitting the reference signal, in which the control information is used to control the RIS to transmit the reference signal. The transceiving module 502 is further configured to send the control information to the RIS. The transceiving module 502 is further configured to receive the reference signal transmitted by the RIS.

Optionally, the capability information of transmitting the reference signal includes at least one of: the number of active array elements, the position information of the active array element, or the maximum transmitting power of the active array element.

Optionally, the position information of the active array element includes at least one of: the position information of the reference array element, the row number of the active array element, the column number of the active array element, the row spacing of the active array element, or the column spacing of the active array element.

Optionally, the indication information further includes at least one of: the number of rows of array elements included in the RIS array, the number of columns of array elements included in the RIS array, the row spacing of the RIS array element, or the column spacing of the RIS array element.

Optionally, the control information includes at least one of: the activation information of the active array element; the power for transmitting the reference signal; the adjustment parameter of the generation sequence of the reference signal; the time-frequency domain position for transmitting the reference signal; or the time-frequency pattern of the active array element for transmitting the reference signal.

Optionally, the transceiving module 502 is further configured to send the configuration information of the reference signal to the terminal device.

Optionally, the configuration information of the reference signal includes at least one of: the antenna port identifier, the time-frequency domain position for transmitting the reference signal; or the adjustment parameter of the generation sequence of the reference signal.

In the present invention, after receiving the indication information, sent by the RIS, for indicating the capability information of transmitting the reference signal of the RIS, the network device may generate the control information for controlling the RIS to transmit the reference signal according to the array information of the RIS and the capability information of transmitting the reference signal, and send the control information to the RIS, and receive the reference signal transmitted by the RIS. In this way, the RIS may transmit the reference signal according to the control information of the network device by reporting the capability of transmitting the reference signal to the network device, thereby performing the channel estimation on the channel between the RIS and the network device, and improving the reliability of the communication system.

It may be understood that the communication device 500 may be the terminal device, a device in the terminal device, or a device that may be used in conjunction with the terminal device.

The communication device 500 is configured on a terminal device side, in which: the transceiving module 502 is configured to receive the reference signal transmitted by the RIS; and the processing module 501 is configured to perform the channel estimation according to the reference signal.

Optionally, the transceiving module 502 is further configured to receive the configuration information of the reference signal sent by the network device, and receive the reference signal transmitted by the RIS according to the configuration information.

Optionally, the configuration information of the reference signal includes at least one of: the antenna port identifier, the time-frequency domain position for transmitting the reference signal; or the adjustment parameter of the generation sequence of the reference signal.

In the present invention, after receiving the reference signal transmitted by the RIS, the terminal device may perform the channel estimation according to the reference signal. Therefore, the channel estimation is performed on the channel between the RIS and the terminal device, and the reliability of the communication system is improved.

Referring to FIG. 6, FIG. 6 is a block diagram illustrating another communication device according to embodiments of the present invention. The communication device 600 may be a network device, an RIS, a terminal device, a chip, a chip system or a processor supporting the network device to implement the above-mentioned method, a chip, a chip system or a processor supporting the RIS to implement the above-mentioned method, and a chip, a chip system or a processor supporting the terminal device to implement the above-mentioned method. The device may be configured to implement the method as described in any of the method embodiments described above, with particular reference to the description of the method embodiments described above.

The communication device 600 may include one or more processors 601. The processor 601 may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal device, a terminal device chip, a DU or a CU, etc.), executing a computer program and processing data of the computer program.

Optionally, the communication device 600 may further include one or more memories 602 on which the computer program 604 may be stored, and the processor 601 executing the computer program 604 to cause the communication device 600 to perform the method as described in the above method embodiments. Optionally, the memory 602 may also have the data stored therein. The communication device 600 and the memory 602 may be provided independently or integrated together.

Optionally, the communication device 600 may further include a transceiver 605 and an antenna 606. The transceiver 605 may be referred to as a transceiving unit, a transceiver, or a transceiving circuit or the like for implementing a transceiving function. The transceiver 605 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device 600 may further include one or more interface circuits 607. The interface circuit 607 is configured to receive and transmit the code instruction to the processor 601. The processor 601 executes the code instruction to enable the communication device 600 to perform the method described in any of the above method embodiments.

In a case where the communication device 600 is an RIS: the processor 601 is configured to perform step 203 and the like in FIG. 2.

In a case where the communication device 600 is a network device: the transceiver 605 is configured to perform steps 301, 303, 304 and the like in FIG. 3.

In a case where the communication device 600 is a terminal device: the transceiver 605 is configured to perform step 401 and the like in FIG. 4.

In one implementation, the processor 601 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In one implementation, the processor 601 may store the computer program 603 that, when run on the processor 601, enables the communication device 600 to perform the method described in any of the above method embodiments. The computer program 603 may be solidified in the processor 601, in which case the processor 601 may be implemented in hardware.

In one implementation, the communication device 600 may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or or an intelligent relay, but the scope of the communication device described in the present invention is not limited thereto. Moreover, the structure of the communication device may not be limited by FIG. 6. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) others.

In a case where the communication device may be the chip or the chip system, reference is made to the block diagram of the chip shown in FIG. 7. The chip shown in FIG. 7 includes a processor 701 and an interface 703. There may be at least one processor 701 and multiple interfaces 703.

In a case where the chip is configured to implement the function of the RIS in embodiments of the present invention: the interface 703 is configured to perform steps 201, 202 and the like in FIG. 2.

In a case where the chip is configured to implement the function of the network device in embodiments of the present invention: the interface 703 is configured to perform steps 301, 303, 304 and the like in FIG. 3.

In a case where the chip is configured to implement the function of the terminal device in embodiments of the present invention: the interface 703 is configured to perform step 401 and the like in FIG. 4.

Optionally, the chip further includes the memory 702 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The present invention further provides a computer program product that, when executed by the computer, causes the functions of any of the method embodiments described above.

The present invention also provides a computer program product that, when executed by the computer, causes the functions of any of the method embodiments described above.

In the above embodiments, the present invention may be implemented in whole or in part by the hardware, software, firmware or their combination. When implemented in the software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

Term "at least one" in the present invention may also be described as one or more, and "multiple" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

## Claims

1. A method for controlling a reconfigurable intelligence surface (RIS) to transmit a reference signal, performed by the RIS, comprising:
sending indication information to a network device, wherein the indication information is used to indicate capability information of transmitting the reference signal of the RIS;
receiving control information sent by the network device, wherein the control information is used to control the RIS to transmit the reference signal; and
transmitting the reference signal according to the control information sent by the network device.

2. The method of claim 1, wherein the capability information of transmitting the reference signal comprises at least one of:
a number of active array elements,
position information of an active array element, or
a maximum transmitting power of an active array element.

3. The method of claim 2, wherein the position information of the active array element comprises at least one of:
position information of a reference array element,
a row number of the active array element,
a column number of the active array element,
a row spacing of the active array element, or
a column spacing of the active array element.

4. The method of claim 1, wherein the indication information further comprises at least one of:
a number of rows of array elements comprised in an RIS array,
a number of columns of array elements comprised in an RIS array,
a row spacing of an RIS array element, or
a column spacing of an RIS array element.

5. The method of any one of claims 1 to 4, wherein the control information comprises at least one of:
activation information of an active array element;
a power for transmitting the reference signal;
an adjustment parameter of a generation sequence of the reference signal;
a time-frequency domain position for transmitting the reference signal; or
a time-frequency pattern of an active array element for transmitting the reference signal.

6. A method for controlling a reconfigurable intelligence surface (RIS) to transmit a reference signal, performed by a network device, comprising:
receiving indication information sent by the RIS, wherein the indication information is used to indicate capability information of transmitting the reference signal of the RIS;
generating control information according to array information of the RIS and the capability information of transmitting the reference signal, wherein the control information is used to control the RIS to transmit the reference signal;
sending the control information to the RIS; and
receiving the reference signal transmitted by the RIS.

7. The method of claim 6, wherein the capability information of transmitting the reference signal comprises at least one of:
a number of active array elements,
position information of an active array element, or
a maximum transmitting power of an active array element.

8. The method of claim 7, wherein the position information of the active array element comprises at least one of:
position information of a reference array element,
a row number of the active array element,
a column number of the active array element,
a row spacing of the active array element, or
a column spacing of the active array element.

9. The method of claim 6, wherein the indication information further comprises at least one of:
a number of rows of array elements comprised in an RIS array,
a number of columns of array elements comprised in an RIS array,
a row spacing of an RIS array element, or
a column spacing of an RIS array element.

10. The method of any one of claims 6 to 9, wherein the control information comprises at least one of:
activation information of an active array element;
a power for transmitting the reference signal;
an adjustment parameter of a generation sequence of the reference signal;
a time-frequency domain position for transmitting the reference signal; or
a time-frequency pattern of an active array element for transmitting the reference signal.

11. The method of any one of claims 6 to 9, further comprising:
sending configuration information of the reference signal to a terminal device.

12. The method of claim 11, wherein the configuration information of the reference signal comprises at least one of:
an antenna port identifier,
a time-frequency domain position for transmitting the reference signal; or
an adjustment parameter of a generation sequence of the reference signal.

13. A method for controlling a reconfigurable intelligence surface (RIS) to transmit a reference signal, performed by a terminal device, comprising:
receiving the reference signal transmitted by the RIS; and
performing channel estimation according to the reference signal.

14. The method of claim 13, wherein receiving the reference signal transmitted by the RIS comprises:
receiving configuration information of the reference signal sent by a network device; and
receiving the reference signal transmitted by the RIS according to the configuration information.

15. The method of claim 14, wherein the configuration information of the reference signal comprises at least one of:
an antenna port identifier,
a time-frequency domain position for transmitting the reference signal; or
an adjustment parameter of a generation sequence of the reference signal.

16. A communication device for a reconfigurable intelligence surface (RIS), comprising:
a transceiving module configured to send indication information to a network device, wherein the indication information is used to indicate capability information of transmitting a reference signal of the RIS, the transceiving module is further configured to receive control information sent by the network device, wherein the control information is used to control the RIS to transmit the reference signal; and
a processing module configured to transmit the reference signal according to the control information sent by the network device.

17. A communication device for a network device, comprising:
a transceiving module configured to receive indication information sent by a reconfigurable intelligence surface (RIS), wherein the indication information is used to indicate capability information of transmitting a reference signal of the RIS; and
a processing module configured to generate control information according to array information of the RIS and the capability information for transmitting the reference signal, wherein the control information is used to control the RIS to transmit the reference signal;
wherein the transceiving module is further configured to send the control information to the RIS, and
the transceiving module is further configured to receive the reference signal transmitted by the RIS.

18. A communication device for a terminal device, comprising:
a transceiving module configured to receive a reference signal transmitted by a reconfigurable intelligence surface (RIS); and
a processing module configured to perform channel estimation according to the reference signal.

19. A communication device, comprising:
a processor; and
a memory;
wherein the memory is configured to store a computer program, and the processor is configured to execute the computer program stored in the memory to cause the device to perform the method of any one of claims 1 to 5.

20. A communication device, comprising:
a processor; and
a memory;
wherein the memory is configured to store a computer program, and the processor is configured to execute the computer program stored in the memory to cause the device to perform the method of any one of claims 6 to 12.

21. A communication device, comprising:
a processor; and
a memory;
wherein the memory is configured to store a computer program, and the processor is configured to execute the computer program stored in the memory to cause the device to perform the method of any one of claims 13 to 15.

22. A computer-readable storage medium for storing instructions that, when executed, cause the method of any one of claims 1 to 5 to be implemented.

23. A computer-readable storage medium for storing instructions that, when executed, cause the method of any one of claims 6 to 12 to be implemented.

24. A computer-readable storage medium for storing instructions that, when executed, cause the method of any one of claims 13 to 15 to be implemented.
